# EUROPÄISCHE PATENTSCHRIFT

(11) **EP 1 920 075 B1**
(45) Veröffentlichungstag und Bekanntmachung des Hinweises auf die Patenterteilung: **28.12.2011**
(21) Anmeldenummer: 06706162.2
(22) Anmeldetag: 04.01.2006
(51) Int. Cl.: C21B 13/00

(54) **VERFAHREN ZUM VORHEIZEN VON EISENAGGLOMERATEN**
METHOD FOR PRE-HEATING IRON AGGLOMERATES
PROCEDE ET PRECHAUFFAGE D'UN AGGLOMERAT FERREUX

(43) Veröffentlichungstag der Anmeldung: 14.05.2008
(73) Patentinhaber: Saarstahl AG, 66333 Völklingen (DE)
(72) Erfinder: KARL, Brotzmann, 92224 Amberg (DE)
(74) Vertreter: Kador, Utz Ulrich
(86) Internationale Anmeldenummer: PCT/EP2006/000036
(87) Internationale Veröffentlichungsnummer: WO 2007/076896

(56) Entgegenhaltungen:
- EP-A- 1 160 337
- WO-A-00/47780
- DE-A1- 2 840 945
- DE-A1- 4 216 891

## Beschreibung

Bei der Stahlerzeugung werden in zunehmendem Ausmaß Eisenagglomerate eingesetzt, die aus Eisenerz über so genannte Direktreduktionsverfahren hergestellt werden. Üblicherweise handelt es sich heute um so genannte DRI-Pellets (auch Eisenschwamm genannt) und um HBI-Masseln. DRI-Pellets sind kegelförmig und haben einen Durchmesser von ungefähr 15 mm, HBI-Masseln sind quaderförmig mit Abmessungen von ca. 30 x 50 x 100 mm.

Die Agglomerate führen jedoch beim Einschmelzen gegenüber Schrott zu beträchtlichen Nachteilen. Das liegt einmal daran, dass verfahrensbedingt ca. 5 - 8% des Eisens in oxidischer Form als Wüstit vorliegen. Aber auch ihre physikalische Beschaffenheit, die gegenüber Schrott zu einem geringeren Lückenvolumen führt, erschwert das Einschmelzen. Für das Einschmelzen vom Agglaomerate werden deshalb z.B. im Elektrolichtbogenofen ca. 600 kWh/t Stahl gegenüber 400 kWh/t Stahl für das Einschmelzen von Schrott benötigt.

Um diesen Nachteil zu vermindern, werden z.B. DRI-Pellets unmittelbar aus dem Direktreduktionsprozess mit einer Temperatur von ca. 650°C in den Einschmelzofen chargiert, wodurch etwa 170 kWh/t Stahl eingespart werden. Diese direkte Verbindung kann natürlich nur angewendet werden, wenn die Direktreduktionsanlage und das Schmelzaggregat räumlich beieinander liegen. Die Anlagen hierfür sind sehr aufwendig.

WO 00/47780 offenbart ein Verfahren und einen Apparat zum Vorheizen von DRI-Pellets vor deren Einführung in einen metallurgischen Ofen, mit einem nicht oxidierenden, reduzierendem oder karbonisierendem Gas bei hohen Temperaturen. Ziel des Verfahrens ist eine Reduktion der Vorheizzeit der DRI-Pellets.

EP 1 160 337 offenbart ein Verfahren zum Vorheizen und Karbonisieren von DRI-Pellets mit den Abgasen aus dem Schmelzofen, die sich durch hohe Temperatur und CO-Gehalt auszeichnen.

Es wurde auch in den "Transactions (S. 11, Vol. 28, 1988t ein Verfahren beschrieben, bei dem HBI-Masseln vorgeheizt werden, indem die Ofenabgase durch ein. Haufwerk von HBI-Massein hindurchgeleitet werden. Wegen der starken Oxidation bei höheren Temperaturen soll die Vorheiztemperatur unter 700°C liegen. Der Wüstitanteil, der mit 8% angegeben ist, wird bei dieser Temperatur nur leicht reduziert und führt zu einem unkontrollierten Schäumen der Schlacke bei Zugabe in ein kohlenstoffhaltiges Eisenbad. Aus der Beschreibung und den Bildern geht außerdem hervor, dass die Abgase das Haufwerk aus HBI-Masseln mit hoher Temperatur verlassen. Effektive Vorheizzeiten werden mit 5-10 Minuten angegeben.

Die der Erfindung zu Grunde liegende Aufgabe besteht darin, die beim Einschmelzen von Eisenagglomeraten bestehenden beträchtlichen Nachteile zu vermeiden und einen neuen Weg aufzuzeigen, bei dem die sonst nachteilige physikalische Beschaffenheit dieser Agglomerate für ein Vorheizverfahren vorteilhaft ausgenutzt und so die Energie für das Einschmelzen beträchtlich reduziert wird.

Die Lösung der Aufgabe erfolgt mit einem Verfahren gemäß Anspruch 1. Vorteilhafte Weiterbildungen dieses Verfahrens sind in den Unteransprüchen angegeben.

Grundlage für die vorliegende Erfindung ist die überraschende Erkenntnis, dass ein heißes Gas beim Durchströmen eines Haufwerkes aus Eisenagglomerat unter bestimmten Bedingungen nicht linear in der Temperatur abfällt, sondern dass das Aufheizgas innerhalb einer dünnen Schicht praktisch vollständig abgekühlt wird. Diese Schicht hat eine von dem Eisenagglomerat abhängige Schichtdicke. So beträgt die Schichtdicke bei den Pellets ca. 20 bis 30 cm und bei den Massein etwa 50 cm. Beim Aufheizvorgang schiebt sich also eine Temperaturfront durch das Haufwerk und die das Haufwerk verlassenden Aufheizgase bleiben auf niedriger Temperatur bis kurz vor dem vollständigen Aufheizen der gesamten Charge. Dadurch ist es möglich, Inertgas für die Aufheizung ohne zusätzliche Kühlung im Kreislauf zu führen: Insbesondere liegt die Temperatur des das Haufwerk verlassenden Heizgases bei einer Einströmtemperatur von ca. 800 bis 1100°C zu Beginn des Aufheizvorgangs in etwa bei Umgebungstemperatur oder knapp, i.e. im Bereich von etwa zehn Grad, darüber. Erst wenn die Temperaturfront fast durch das gesamte Haufwerk hindurch gewandert ist, beginnt die Temperatur des das Haufwerks verlassenden Heizgases zu steigen und sie erreicht gegen Ende des Aufheizvorgangs etwa 180 bis 220°C.

Die erfindungsgemäße Wirkung auf die Temperaturverteilung im Agglomerathaufwerk werden erreicht, wenn der mittlere Gasfluss des zirkulierenden Aufheizgases bei DRI-Pellets unter 6.000 Nm³/hm² und bei HBI-Masseln unter 12.000 Nm³/hm² bezogen auf die freie Oberfläche des Agglomerathaufwerkes liegt. Vorzugsweise liegt der mittlere Gasfluß bei den DRI-Pellets zwischen etwa 1.000 und 4.000 Nm³/h und bevorzugter zwischen etwa 1.500 und 3.000 Nm³/h pro 1 m² freier Oberfläche des Agglomerathaufwerks und bei HBI-Masseln zwischen etwa 2.000 und 7.000 Nm³/h und bevorzugter zwischen etwa 2.500 und 5.000 Nm³/h pro 1 m² freier Oberfläche des Agglomerathaufwerks. Diese Maßnahme erscheint auf den ersten Eindruck widersinnig. Die Vorheizzeiten liegen dadurch so hoch, dass, wenn die gesamte Produktion vorgeheizt werden soll, mehrere Vorheizaggregate für ein Schmelzgefäß verwendet werden müssen. Außerdem führt die längere. Vorheizzeit zu entsprechend höheren Wärmeverlusten. Für den Aufheizprozess überwiegen jedoch die Vorteile, weil das zirkulierende Inertgas nach dem Verlassen der aufzuheizenden Agglomeratschüttung nicht gekühlt werden muss und damit der gesamte thermische Wirkungsgrad wesentlich höher liegt, als wenn schneller aufgeheizt würde. Außerdem werden die Vorrichtungen für das Aufheizen einfacher.

Der angegebene Grenzwert für den Inertgasfluß ist als Mittelwert über die gesamte Heizperiode zu verstehen. So kann beispielsweise beim Aufheizen von DRI-Pellets der Gasfluss während der ersten Hälfte des Aufheizzyklus unter 8.000 Nm³/hm² liegen. In der zweiten Hälfte wird dann die Gasmenge kontinuierlich bis auf 1.000 Nm³/hm² reduziert. Es kann beispielsweise auch mit 6.000 Nm³/hm² begonnen werden und die Gesamtmenge wird kontinuierlich bis auf 1.000 Nm³/hm² reduziert. Beim Aufheizen von HBI-Masseln kann beispielsweise der Heizgasstrom während der ersten Hälfte des Aufheizzyklus bei 14.000 Nm³/hm² liegen, in der zweiten Hälfte wird dann die Gasmenge kontinuierlich bis auf 2.000 Nm³/hm² reduziert. Es kann jedoch auch beispielsweise mit 12.000 Nm³/hm² begonnen werden und die Aufheizgasmenge wird kontinuierlich bis auf 2.000 Nm³/hm² reduziert. Die in beiden Beispielen genannte Fahrweise führt dazu, dass der Druckabfall im Aufheizgefäß über die gesamte Aufheizzeit ungefähr konstant bleibt.

Um die erfindungsgemäßen Bedingungen zu erfüllen muss die geometrische Form des Aufheizgefäßes entsprechend angepasst werden. So soll bei dem Vorheizgefäß für das Aufheizen von DRI-Pellets das Verhältnis von lichtem Gefäßdurchmesser zur lichten Gefäßhöhe zwischen 0,5 und 1,5 liegen. Im Mittel soll der lichte Gefäßdurchmesser etwa so groß sein wie die Höhe der Pelletschicht.

Bei dem Vorheizgefäß für das Aufheizen von HBI-Massein soll das Verhältnis von Gefäßdurchmesser zu Gefäßhöhe zwischen 1 und 3 liegen. Im Mittel soll der lichte Gefäßdurchmesser etwa halb so groß sein wie die Dicke der Agglomeratschicht.

Die genannten Bedingungen gelten für Gefäße mit einem kreisförmigen Querschnitt. Sie können natürlich sinngemäß auf jede andere geometrische Form übertragen werden.

Erfindungsgemäß ist es vorteilhaft, wenn der Aufheizstrom von oben auf das Haufwerk geleitet wird und das Haufwerk von oben nach unten durchströmt. Es ist weiterhin vorteilhaft, wenn bei dieser Betriebsweise im unteren Teil eine konische Verjüngung angebracht wird. Dieser Teil ist jedoch bei den oben genannten geometrischen Bedingungen für das Aufheizgefäß nicht zu berücksichtigen,

Es hat sich gezeigt, dass durch die Formgebung im unteren Bereich ein vorteilhafter Effekt auf die annähernd vollständige gleichmäßige Aufheizung der DRI-Schüttung erreicht werden kann. Wird der Querschnitt im unteren Bereich auf ca. 1/3 des Querschnittes im oberen Aufheizgefäß reduziert, so wird der letzte Teil der Schüttung besser aufgeheizt als bei konstantem Querschnitt.

Es hat sich überraschenderweise gezeigt, dass als "Inertgas" Luft im Kreislauf geführt werden kann. Durch den Sauerstoff der Luft werden dabei zu Beginn des Aufheizprozesses ca. 0,1 % der Eisenmenge oxidiert, die jedoch später wieder reduziert werden. Schon nach einer kurzen Zeit ist die in der Luft vorhandene Sauerstoffmenge an das Eisen gebunden und das zirkulierende Gas für den Aufheizprozess besteht dann nur aus einem nichtoxidierenden Gas.

Die weitgehende Reduktion des Wüstitgehaltes ist beim Vorheizen der Eisenagglomerate von entscheidender Bedeutung. Der Energiebedarf für das Einschmelzen wird dadurch um ca. 25% vermindert. Aber auch die Zugabe zu einem kohlenstoffhaltigen Eisenbad, was übliche Praxis ist, wird einfacher, weil damit das sonst gelegentlich auftretende Schäumen der Schlacke verhindert wird.

Es hat sich überraschender Weise gezeigt, dass beim erfindungsgemäßen Verfahren der Wüstitanteil der Agglomerate praktisch vollständig reduziert wird. Die Erklärung dafür dürfte sein, dass sich schon beim Beginn der Wüstitreduktion der CO-Gehalt des zirkulierenden Inertgases sehr schnell erhöht, wodurch optimale Bedingungen für die Wüstitreduktion geschafften werden. Die Wirkung kann noch unterstützt werden, wenn der Druck des Aufheizgases pulsierend geändert wird. Druckänderungen bis zu 20% sind hierfür ausreichend.

Die erfindungsgemäße Reduzierung der Gasumlaufmenge und die konische Verjüngung des Querschnittes im unteren Teil des Aufheizgefäßes begünstigen die weitgehende Reduktion des Wüstitgehaltes des Agglomerates auch im unteren Teil des Aufheizgefäßes.

Es bilden sich durch die Wüstit-Reduktion beträchtliche Mengen an CO, die entweder abgefackelt oder erfasst und als Brenngas für den Wärmeaustauscher eingesetzt werden, wobei etwa die Hälfte des Energiebedarfs dadurch gedeckt werden kann.

Das erfindungsgemäße Verfahren begünstigt also in doppelter Weise die wichtige Reduktion des Wüstitgehaltes. Es ist einmal der hohe CO-Gehalt des zirkulierenden Gasses und die verhältnismäßig lange Aufheizzeit.

Es hat sich gezeigt, dass die Bedingungen für ein erfindungsgemäßes Aufheizen von Eisenschwamm einfach kontrolliert werden können, indem die Temperatur des Abgases beim Verlassen des Vorheizgefäßes gemessen wird. Überschreitet die Abgastemperatur 200°C, so wird der Aufheizgasstrom reduziert. Im Allgemeinen sind die Bedingungen für ein optimales Aufheizen gut reproduzierbar. Gelegentliche Anpassungen sind jedoch erforderlich, weil der Anteil von Agglomeraten einer kleineren Korngröße bzw. auch der Feinanteil sowohl der Menge nach wie auch in der örtlichen Verteilung im Aufheizgefäß schwanken kann.

Die Vorheiztemperatur des Agglomerates soll zwischen 800°C und 1.100°C liegen. Außerdem ist es vorteilhaft, wenn der C-Gehalt des Agglomerates bei mindestens 2% liegt. Diese beiden Bedingungen begünstigen die vollständige Reduktion des Wüstitanteils.

Es gehört auch zum Wesen der vorliegenden Erfindung, die Oberfläche der Pellets so zu behandeln, dass sie bei hohen Vorheiztemperaturen nicht zusammensintern. Diese Behandlung ist von den Direktreduktionsverfahren im Schachtofen bekannt. Die Pulver, mit denen die Pellets bestäubt werden, bestehen im Allgemeinen aus MgO, CaO oder dessen Verbindungen. Bei dieser Behandlung können Vorheiztemperaturen bis zu 1.100°C angewendet werden.

Durch die Anwendung des erfindungsgemäßen Verfahrens wird der Energiebedarf für das Einschmelzen von Agglmeraten im Elektrolichtbogenofen auf weniger als 200 kWh/t Stahl reduziert. Auch ein höherer Gangartanteil der Erze kann durch die hohe Vorheiztemperatur im Schmelzprozess leichter toleriert werden.

Eine beispielhafte Vorrichtung zur Durchführung des erfindungsgemäßen Verfahrens ist in dem beigefügten Bild dargestellt. Sie besteht aus einem Aufheizgefäß, einer Regeneratoranlage zum Aufheizen des Inertgases, einem Gebläse und einem Tuchfilter. Die Regeneratoranlage kann ein Schüttgutregenerator sein. Anstelle des Regenerators kann jedoch auch ein Rekuperator verwendet werden. Die Anlage wird damit einfacher, die höchstmögliche Temperatur und der thermische Wirkungsgrad werden jedoch herabgesetzt.

Der im Tuchfilter abgeschiedene Staub ist metallisch und damit pyrophor. Es müssen deshalb entsprechende Maßnahmen getroffen werden, damit das Filter immer mit Inertgas gefüllt ist. Der Staub kann jedoch einfach oxidiert werden, wenn das Gas mit etwas Wasserdampf angereichert wird, wobei eine Sättigungstemperatur von 20°C ausreichend ist.

Eine besonders vorteilhafte Ausführung besteht in der Kombination eines für das vorliegende Verfahren abgeänderten Schüttgutregenerators. Für diesen Fall wird der Regenerator mit einer wesentlich erhöhten Schichtstärke des Schüttgutes betrieben. Während üblicherweise die Dicke der radial durchströmten Schüttgutschicht etwa 60 cm beträgt, wird sie bei der erfindungsgemäßen Anwendung etwa verdoppelt. Dadurch reicht die gespeicherte Wärme aus, um die gesamte DRI-Charge aufzuheizen. Es ergibt sich dadurch auch eine vorteilhafte Kombination des erforderlichen Druckes für die Zirkulation des Inertgases. Während der Druckabfall im Schüttgutregenerator kontinuierlich weniger wird, steigt er im Vorheizgefäß an. Es findet damit eine gewisse Angleichung des Druckabfalls während des Aufheizprozesses statt.

Wichtig ist die Formgebung für das Aufheizgefäß. Als Beispiel sei das Aufheizen einer Charge mit 50 t Eisenschwamm angeführt. Für 50 t DRI-Pellets wird ein inneres Volumen des Gefäßes von ungefähr 30 m³ benötigt. Das Gefäß hat einen lichten Durchmesser von 3,3 m und eine Höhe für den zylindrischen Teil von 4 m, wovon etwa 3,5 m mit Pellets gefüllt sind. Oberhalb der Pellets verbleibt ein freier Raum, durch den das heiße Inertgas eingeleitet wird. Das heiße Gas durchströmt die Füllung von oben nach unten. Der untere Teil des Gefäßes besteht aus einem sich verjüngenden Konus, in dessen unterem Teil sich Öffnungen für den Abzug des abgekühlten Inertgases befinden.

Für das Aufheizen der Charge wird eine Inertgasmenge von insgesamt 40.000 Nm³ durch die aufzuheizenden Pellets geleitet. Erfindungsgemäß wird mit einem Inertgasstrom von 8.000 Nm³/hm² begonnen. Bei einem Durchmesser des Aufheizgefäßes von 3,3 m beträgt der Querschnitt 8,6 m² und der Gasdurchfluss 68.800 Nm³/h. Nach 10 Minuten wird die Gasmenge innerhalb von 40 Minuten kontinuierlich bis auf 1.000 Nm³/hm² reduziert. Die Gesamtaufheizzeit liegt bei ca. 50 Minuten. Die Abgastemperatur am Ende des Heizzyklus beträgt 180°C. Es erübrigt sich eine Kühlung des zirkulierenden Inertgases.

Als zweites Beispiel sei das Aufheizen einer Charge mit 50 t HBI angeführt. Für 50 t HBI wird ein inneres Volumen des Gefäßes von ungefähr 20 m³ benötigt. Das Gefäß hat einen lichten Durchmesser von 2 m und eine Höhe für den zylindrischen Teil von 6 m, wovon etwa 5,5 m mit HBI gefüllt sind. Oberhalb des Haufwerkes verbleibt ein , freier Raum, durch den das heiße Inertgas eingeleitet wird. Das heiße Gas durchströmt die Füllung von oben nach unten. Der untere Teil des Gefäßes besteht aus einem sich verjüngenden Konus, in dessen unterem Teil sich Öffnungen für den Abzug des abgekühlten Inertgases befinden.

Für das Aufheizen der Charge wird eine Inertgasmenge von insgesamt 40.000 Nm³ durch das aufzuheizende Haufwerk geleitet. Erfindungsgemäß wird mit einem Inertgasstrom von 7.000 Nm³/hm² begonnen. Bei einem Durchmesser des Aufheizgefäßes von 2 m beträgt der Querschnitt 3,1 m² und der Gasdurchfluss 21.700 Nm³/h. Nach 20 Minuten wird die Gasmenge innerhalb von zwei Stunden kontinuierlich bis auf 3.000 Nm³/hm² reduziert. Die Gesamtaufheizzeit liegt bei ca. 2,3 Stunden. Die Abgastemperatur am Ende des Heizzyklus beträgt 180°C. Es erübrigt sich eine Kühlung des zirkulierenden Inertgases.

Die Pellets können nach dem Aufheizen über einen schieberförmigen Verschluss am Boden des Aufheizgefäßes in ein Schmelzgefäß chargiert werden. Es kann aber auch zweckmäßig sein, das Gefäß so auszubilden, dass es die Form einer Schrottmulde hat, wobei dann die obere Begrenzung ein abnehmbarer oder abklappbarer Deckel ist. Der Agglomerate wird dann, wie beim Chargieren von Schrott, nach dem Vorheizen durch Kippen in das Schmelzgefäß entleert.

Ein kontinuierliches Vorheizen in Verbindung mit einem Schmelzgefäß ist kaum vorstellbar. So müsste bei 50-t-Pellets, die innerhalb von 20 Minuten kontinuierlich chargiert werden, ein Aufheizgasstrom von 120.000 Nm³/h angewendet werden, wofür sehr aufwendige Regeneratoranlagen und ein hoher Druck erforderlich wären. Auch für das Aufheizgefäß führt das zu nicht realisierbaren Bedingungen

Die Erfindung wurde in Verbindung mit einem Elektrolichtbogenofen als Eihschmelzaggregat beschrieben. Sie bietet dort, wie eingangs beschrieben, besondere Vorteile. Sie ist jedoch nicht auf diese Kombination beschränkt. Sie kann in Verbindung mit jedem Einschmelzaggregat angewendet werden. Z.B. kann das Einschmelzaggregat auch ein Konverter sein. Das Vorheizen des DRI ermöglicht es, den DRI-Zusatz beträchtlich zu steigern. Dabei ist es besonders vorteilhaft, Verfahren in Verbindung mit einem bodenblasenden Konverter mit Heißluftnachverbrennung der Reaktionsgase einzusetzen. Mit einem Kohlenstoffgehalt von etwa 4% in den Pellets kann bei Anwendung des erfindungsgemäßen Verfahrens flüssiger Stahl in einem solchen Konverter ohne weitere Energiezufuhr und ohne flüssiges Roheisen hergestellt werden.

Das erfindungsgemäße Verfahren ist nicht auf das Aufheizen der genannten Eisenagglomerate beschränkt. Ferrolegierungen haben oft eine ähnliche Stückgröße wie HBI-Masseln, jedoch mit einer wesentlich größeren Schwankungsbreite in der Stückgröße. Auch diese Stoffe lassen sich in einer Vorrichtung gemäß der vorliegenden Erfindung aufheizen. Bei einem höheren kleinstückigen Anteil ist es vorteilhaft, an der unteren Grenze der erfindungsgemäßen Bereiche zu arbeiten, d.h. das Verhältnis von Durchmesser zur Höhe des Aufheizgefäßes soll dann etwa 1 betragen und die Gasmenge sollte unter 5.000 Nm³/hm² liegen. Je nach Kornspektrum sind die optimalen Werte experimentell zu ermitteln. Die erfindungsgemäße Lehre führt zu beträchtlichen Einsparungen an Energie für das Einschmelzen und zu einer entsprechenden Erhöhung der Produktivität.

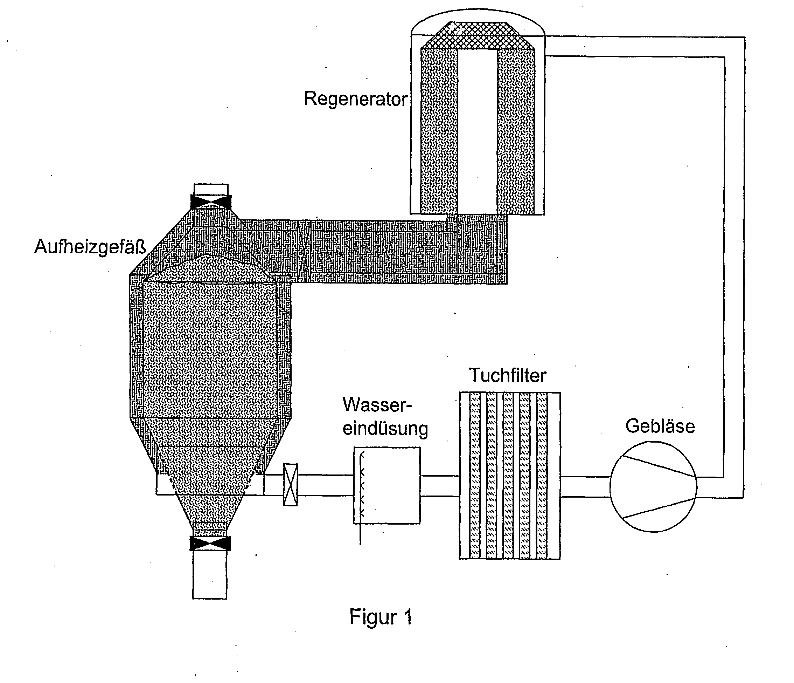

## Patentansprüche

1. Verfahren zum Vorheizen von Eisenagglomerat durch einen heißen Gasstrom, aufweisend die folgenden Schritte:
Bereitstellen des Eisenagglomerats in einem Eisenagglomerathaufwerk;
Erwärmen des Gases auf die Vorheiztemperatur in einem Wärmetauscher, und
Hindurchleiten des heißen Gases durch das Eisenagglomerathaufwerk, wobei der Gasfluß derart ist, dass der Temperaturabfall des heißen Gases über eine relativ dünne Schicht in dem Eisenagglomerathaufwerk erfolgt, so dass sich im Verlauf des Aufheizens eine Temperaturfront durch das Haufwerk schiebt, für das Vorheizen von DRI-Pellets der Mittelwert des Aufheizgasstromes unter 6.000 Nm³/hm² liegt und für das Vorheizen von HBI-Masseln der Mittelwert des Aufheizgasstromes unter 12.000 Nm³/hm² liegt.

2. Verfahren nach Anspruch 1, ferner aufweisend den Schritt des Wiederverwendens des das Eisenagglomerathaufwerks verlassenden Gases durch erneutes Erwärmen und erneutes Hindurchleiten des Gases durch das Eisenagglomerathaufwerk.

3. Verfahren nach Anspruch 1 oder 2, wobei das Eisenagglomerathaufwerk von einem heißen, zirkulierenden Gas durchströmt wird, dieses Gas dabei seine Wärmeenergie weitgehend an den Agglomerat überträgt und dann in einem Wärmetauscher wieder auf die Vorheiztemperatur erwärmt wird.

4. Verfahren nach einem der Ansprüche 1 bis 3, wobei über die gesamte Heizzeit der Mittelwert des Aufheizgasstromes unter 4.000Nm³/h multipliziert mit dem Durchmesser der Agglomerate, gemessen in cm, bezogen auf 1 m² Oberfläche des Agglomerathaufwerks liegt.

5. Verfahren nach einem der Ansprüche 1 bis 4, **dadurch gekennzeichnet, dass** das Aufheizgas über einen freien Raum von oben auf das Agglomertathaufwerk geleitet wird.

6. Verfahren nach einem der Anspruche 1 bis 5, **dadurch gekennzeichnet**, das Eisenagglomerat mit einem Kohlenstoffgehalt von 2 - 5% durch ein inertes Heizgas mit einer Temperatur von 800°C bis 1.100°C aufgeheizt wird.

7. Verfahren nach einem der Ansprüche 1 bis 6, **dadurch gekennzeichnet, dass** der Druck des Heizgases pulsierend geändert wird.

8. Verfahren nach einem der Ansprüche 1 bis 7, **dadurch gekennzeichnet, dass** der Druck bis zu 20% bezogen auf den mittleren Druck variiert wird.

9. Verfahren nach einem der Ansprüche 1 bis 8, **dadurch gekennzeichnet, dass** der Gasdurchfluss durch die Abgastemperatur gesteuert wird.

10. Verfahren zum Vorheizen nach einem der Ansprüche 1 bis 9, **dadurch gekennzeichnet, dass** beim Vorheizen von DRI-Pellets das Verhältnis aus Höhe und Querschnitt des DRI-Haufwerkes zwischen 0,5 und 1,5 eingesteilt wird.

11. Verfahren zum Vorheizen nach einem der Ansprüche 1 bis 9, **dadurch gekennzeichnet, dass** beim Vorheizen von HBI-Masseln das Verhältnis aus Höhe und Querschnitt des HBI-Masseln-Haufwerkes zwischen 1 und 3 eingestellt wird.

12. Verfahren zum Vorheizen nach einem der Ansprüche 1 bis 7, **dadurch gekennzeichnet, dass** der Austritt des zirkulierenden Aufheizgases durch einen konischen Stutzen erfolgt, in dem sich der Querschnitt auf mindestens 1/3 des Querschnittes des Aufheizgefaßes reduziert

## Claims

1. A method for preheating iron agglomerate by a hot gas stream having the following steps:
supplying the iron agglomerate in an iron agglomerate bed;
heating the gas to the preheating temperature in a heat exchanger; and
passing the hot gas through the iron agglomerate bed, the gas flow rate being such that the temperature drop of the hot gas occurs over a relatively thin layer in the iron agglomerate bed so that a temperature front moves through the bed in the course of heating, for preheating DRI pellets the average value of the heating gas flow rate is below 6,000 Nm³/hm² and for preheating HBI briquettes the average value of the heating gas flow rate is below 12,000 Nm³/hm².

2. The method according to claim 1, further having the step of reusing the gas leaving the iron agglomerate bed by reheating and repassing the gas through the iron agglomerate bed.

3. The method according to claim 1 or 2, wherein the iron agglomerate bed is flowed through by a hot, circulating gas, said gas thereby transfers its heat energy to a large extent to the agglomerate and is then heated to the preheating temperature again in a heat exchanger.

4. The method according to any of claims 1 to 3, wherein the average value of the heating gas flow rate over the total heating time is below 4,000 Nm³/h multiplied by the diameter of the agglomerates, measured in cm, based on 1 m² of surface of the agglomerate bed.

5. The method according to any of the claims 1 to 4, **characterized in that** the heating gas is passed onto the agglomerate bed from about through a free space.

6. The method according to any of the claims 1 to 5, **characterized in that** iron agglomerate with a carbon content of 2-5% is heated by an inert heating gas having a temperature of 800°C. to 1,100°C.

7. The method according to any of the claims 1 to 6, **characterized in that** the pressure of the heating gas is changed in pulsating fashion.

8. The method according to any of the claims 1 to 7, **characterized in that** the pressure is varied up to 20% based on the average pressure.

9. The method according to any of the claims 1 to 8, **characterized in that** the gas flow rate is controlled by the off-gas temperature.

10. The preheating method according to any of the claims 1 to 9, **characterized in that** when preheating DRI pellets the ratio of height and cross section of the DRI bed is adjusted between 0.5 and 1.5.

11. The preheating method according to any of the claims 1 to 9, **characterized in that** when preheating HBI briquettes the ratio of height and cross section of the HBI briquette bed is adjusted between 1 and 3.

12. The preheating method according to any of the claims 1 to 9, **characterized in that** the exit of the circulating heating gas occurs through a conical socket in which the cross section is reduced to at least 1/3 of the cross section of the heating vessel.

## Revendications

1. Procédé de préchauffage d'un agglomérat ferreux par un courant de gaz chaud, comportant les étapes suivantes consistant à :
préparer l'agglomérat ferreux sous la forme de déblais d'agglomérat son énergie thermique ferreux ;
chauffer le gaz à la température de préchauffage dans un échangeur de chaleur ; et
faire passer le gaz chaud à travers les déblais d'agglomérat ferreux, le flux gazeux étant tel que la chute de température du gaz chaud se fasse au-dessus d'une couche relativement mince dans les déblais d'agglomérat ferreux de sorte qu'un front de température avance à travers les déblais au cours de l'échauffement, que la valeur moyenne du courant de gaz de chauffage soit inférieure à 6000 Nm³/hm² pour le préchauffage de pellets de fer de réduction directe (DRI) et que la valeur moyenne du courant de gaz de chauffage soit inférieure à 12 000 Nm³/hm² pour le préchauffage de gueuses de fer briqueté à chaud (HBI).

2. Procédé selon la revendication 1, comportant en outre l'étape de réutilisation du gaz quittant les déblais d'agglomérat ferreux par un nouvel échauffement et un nouveau passage du gaz à travers les déblais d'agglomérat ferreux.

3. Procédé selon la revendication 1 ou 2, dans lequel les déblais d'agglomérat ferreux sont traversés par un gaz chaud circulant, ce gaz transférant ainsi dans une large mesure son énergie thermique à l'agglomérat et étant ensuite chauffé à nouveau dans un échangeur de chaleur à la température de préchauffage.

4. Procédé selon l'une quelconque des revendications 1 à 3, dans lequel, sur toute la durée d'échauffement, la valeur moyenne du courant de gaz de chauffage est inférieure à 4000 Nm³/h multipliés par le diamètre des agglomérats, mesuré en cm, rapporté à 1 m² de surface des déblais d'agglomérat.

5. Procédé selon l'une quelconque des revendications 1 à 4, **caractérisé en ce que** le gaz de chauffage est acheminé via un espace libre par le haut sur les déblais d'agglomérat.

6. Procédé selon l'une quelconque des revendications 1 à 5, **caractérisé en ce que** l'agglomérat ferreux ayant une teneur en carbone de 2 à 5 % est chauffé par un gaz de chauffage inerte à une température de 800 °C à 1 100 °C.

7. Procédé selon l'une quelconque des revendications 1 à 6, **caractérisé en ce que** la pression du gaz de chauffage est modifiée par impulsion.

8. Procédé selon l'une quelconque des revendications 1 à 7, **caractérisé en ce que** la pression est modifiée jusqu'à 20 % par rapport à la pression moyenne.

9. Procédé selon l'une quelconque des revendications 1 à 8, **caractérisé en ce que** l'écoulement de gaz est commandé par la température du gaz d'échappement.

10. Procédé de préchauffage selon l'une quelconque des revendications 1 à 9, **caractérisé en ce que**, dans le cas du préchauffage de pellets de DRI, le rapport de la hauteur à la section transversale des déblais de DRI est réglé entre 0,5 et 1,5.

11. Procédé de préchauffage selon l'une quelconque des revendications 1 à 9, **caractérisé en ce que**, dans le cas du préchauffage de gueuses de HBI, le rapport de la hauteur à la section transversale des déblais de gueuses de HBI est réglé entre 1 et 3.

12. Procédé de préchauffage selon l'une quelconque des revendications 1 à 7, **caractérisé en ce que** la sortie du gaz de chauffage circulant se fait par une tubulure conique, dans laquelle la section transversale est réduite à au moins 1/3 de la section transversale du récipient de chauffage.
